# EUROPEAN PATENT APPLICATION

(11) **EP 0 896 180 A2**
(43) Date of publication of application: **10.02.1999**
(21) Application number: 98202605.6
(22) Date of filing: 01.08.1998
(51) Int. Cl.: F16L 19/08

(54) **Union for the connection of smooth pipes to threaded connections of hydraulic equipment and the like**

(30) Priority: 08.08.1997 IT MI971919
(71) Applicant: CAZZANIGA S.p.A., Milano (IT)
(72) Inventor: Peroni, Andrea, 20046 Biassono (Milano) (IT)
(74) Representative: Raimondi, Alfredo, Dott. Ing. Prof.

(57) **Abstract**

Union for the sealed connection of pipes (1) to threaded connections of hydraulic equipment and the like, comprising at least one element (15) with a female thread (15a) for locking the union on said threaded connection (2,2a), comprising a bush (11) for guiding the pipe (1) having a substantially cylindrical shape with two diameters (11a,11b), housing a first external sealing element (12a) and a second internal sealing element (12b) and provided with means (11e) suitable for engagement with corresponding means (13a,13b) of a nose piece (13) for mutual fastening in the axial direction, said nose piece having means (13e) which are deformable towards the longitudinal axis of the union for engagement with and mechanical retaining of the pipe.

## Description

The present invention relates to a union for the sealed connection of pipes to threaded connections of hydraulic equipment and the like, comprising a bush for guiding the pipe having a substantially cylindrical shape with two diameters, housing a first external sealing element and a second internal sealing element and provided with means suitable for engagement with corresponding means of a nose piece which has means deformable towards the longitudinal axis of the union for mechanically retaining the pipe.

It is known that the connection of smooth pipes, made of both metal and plastic, to threaded connection members present on pipes, hydraulic equipment and the like, may be achieved by means of union elements which are suitable for performing the dual function of hydraulic sealing of the joint and at the same time mechanical retention of the pipe inside the union so as to prevent possible extraction, in the axial direction, of the pipe itself.

Numerous examples of embodiment of said unions are also known in the art, said unions generally consisting of several separate elements which are individually designed to perform the hydraulic sealing and mechanical retention of the pipe and are arranged in the working position by the user in the correct sequence and then retained and compressed in the axial direction by the nut for locking the union.

Said unions of the known type, although fulfilling their purpose, nevertheless have some drawbacks associated with the practicality of installation since they require a high degree of skill on the part of the installation engineer.

The technical problem which is posed, therefore, is that of providing a union for the frontal connection of smooth pipes to threaded connection elements of hydraulic systems and the like, which is able to provide a perfect seal and simultaneous mechanical retention of the pipe so as to prevent extraction thereof also under conditions of high pressure of the fluid which flows through the pipe itself.

Within the scope of this problem a further requirement is that the union should consist of a small number of parts which can be preassembled with one another so as to allow rapid, easy and safe installation also by non-specialized personnel while ensuring a high degree of operational reliability.

These technical problems are solved according to the present invention by a union for the sealed connection of pipes to threaded connections of hydraulic equipment and the like, comprising an element with a female thread for locking the union on said threaded connection, a bush for guiding the pipe having a substantially cylindrical shape with two diameters, housing a first external sealing element and a second internal sealing element and provided with means suitable for engagement with corresponding means of a nose piece for mutual fastening in the axial direction, said nose piece having means which are deformable towards the longitudinal axis of the union for mechanically retaining the pipe.

Further details may be obtained from the following description of a non-limiting example of embodiment of the invention provided with reference to the accompanying drawings, in which:
Figure 1 shows a view, partially sectioned in the axial direction, of the union according to the present invention in exploded form;
Figure 2 shows a view, partially sectioned in the axial direction, of the preassembled union mounted on the pipe to be connected to the threaded connection element;
Figs. 3a-3d show the sequence for closing the union on the threaded connection; and
Figure 4 shows a variation of the example of embodiment of the element for mechanically retaining the pipe.

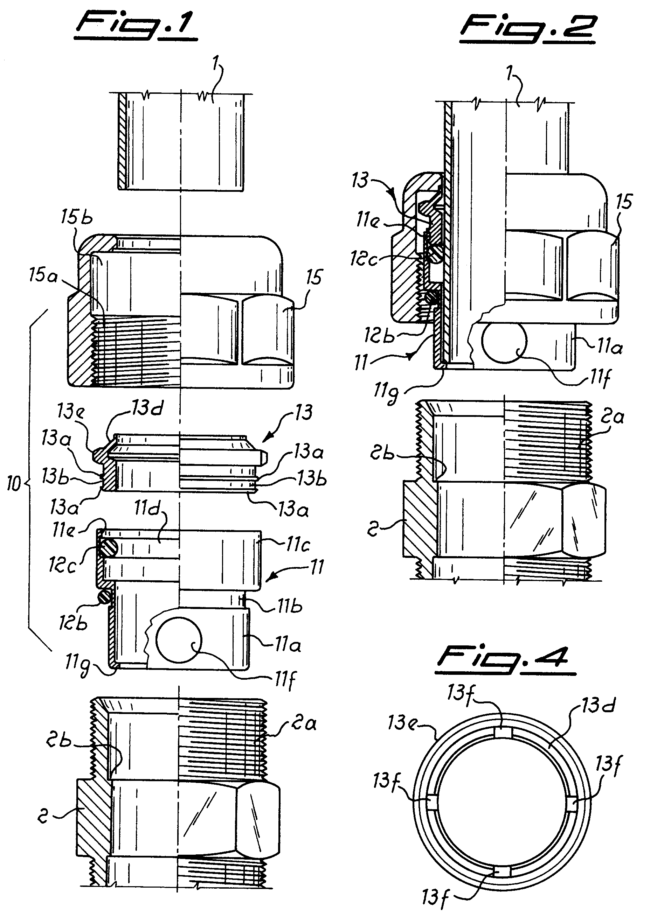

As illustrated in Fig. 1, the union 10 for connection of a smooth pipe 1 to a threaded connection 2 substantially consists of a bush 11 for guiding the pipe 1, a nose piece 13, both provided with hydraulic sealing elements, and a locking nut 15.

More particularly the bush 11 has a substantially cylindrical shape with two diameters; the external surface of the bush part 11a with a smaller diameter has, formed on it, an annular seat 11b for receiving a sealing element 12b of the O-ring type suitable for providing a hydraulic seal on the connection 2, as well as a through-opening 11f which allows visual inspection inside the union as will emerge more clearly below.

The end of the said part 11a with a smaller diameter has a bent portion 11g directed towards the inside, forming an end-of-travel stop for insertion of the pipe 1.

The internal surface 11c the bush part 11 with a larger diameter has, formed in it, an additional annular seat 11d for containing a second sealing element 12c of the O-ring type, for the seal on the pipe 1.

The internal upper edge of the said part 11c with a larger diameter also has an annular tooth 11e extending radially towards the inside of the bush 11, the purpose of which will become clear below.

Said guide bush 11 is suitable for coupling with the internally hollow nose piece 13, the external surface of which has two annular shoulders 13a which define a circumferential seat 13b suitable for engagement with said annular tooth 11e of the bush 11, so as to cause fastening together of the two elements in the axial direction.

Said nose piece 13 also has an end part shaped in the manner of a substantially frustoconical edge 13d, the base of which extends radially towards the outside with a circumferential thread 13e.

Said frustoconical edge 13d may be resiliently deformable and designed to cooperate with the pipe so as to mechanically retain it in the axial direction.

The union 10 is completed by a locking nut 15 with a female thread 15a for engagement with the corresponding thread 2a of the connection 2.

The thread 15a is axially interrupted at a predetermined height of the nut so as to produce inside the latter a seat 15b for receiving the sealing elements 11 and 13, retention of which in the axial direction is favoured by the thread 13e.

The operating principle of the union according to the invention is as follows:

Once the guide bush 11 and the nose piece 13 are fastened together in the axial direction, by means of insertion of the associated annular tooth 11e of the guide 11 into the corresponding seat 13b of the nose piece 13, the body thus formed is inserted inside the nut 15 by means of screwing of the thread 13e of the nose piece 13 onto the female thread 15a of the nut itself until, once the said female thread 15a has been exceeded, the nose piece enters into the internal seat 15b of the nut where it is retained with a slight amount of play.

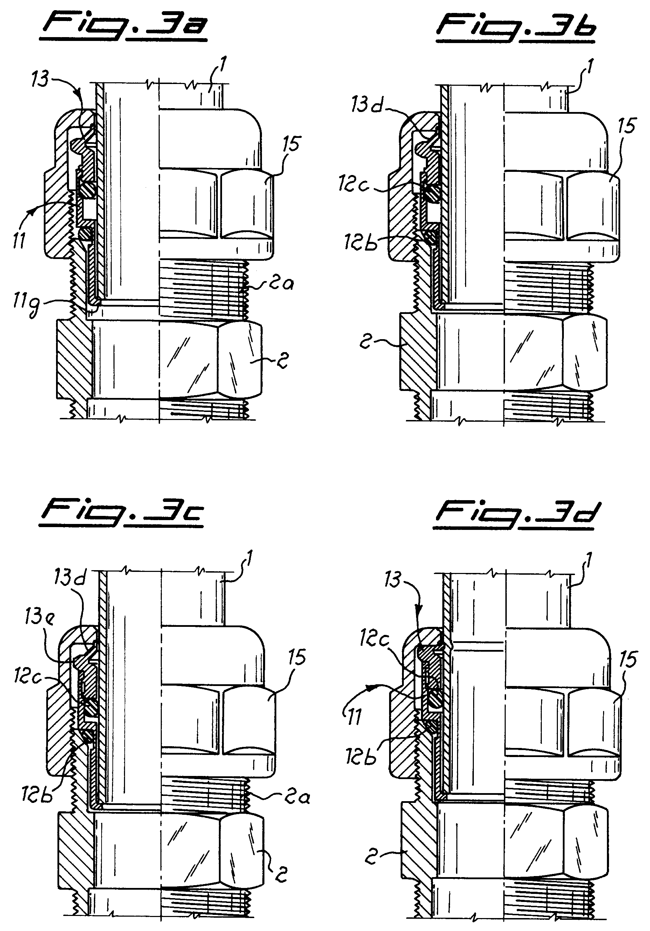

The union thus preassembled may be mounted onto the pipe 2 (Fig. 2) and is ready to perform the connection in accordance with the sequence described below with reference to Figs. 3a-3d.

As illustrated, once the union 10 has been mounted on the pipe 2 and after checking, through the opening 11f, that the end of the pipe 1 has reached the end-of-travel stop on the bent portion 11g of the bush 11, the nut 15 is screwed onto the thread 2a of the connection 2 until the free edge of the bush 11 comes up against a corresponding shoulder 2b on the connection 2 (Fig. 3b), said first stage of tightening resulting in compression of the sealing ring 12b which forms the seal between the union 10 and the connection 2.

Continuing with tightening of the nut 15, an axial force is transmitted so as to push the nose piece 13 on the bush 11, causing deformation of the annular shoulder 13a which, yielding, allows the nose piece 13 to slide axially inside the larger-diameter part of the bush 11, causing deformation of the O-ring 12b, which, sliding axially in the free volume defined by the difference between the internal diameter of the bush part 11b and the external diameter of the pipe 2, produces the seal between the union 10 and the pipe 2 itself.

As shown in Fig. 3c, between the O-ring 12b and the bottom of the larger-diameter cylindrical part 11b of the bush 11, there remains a free volume suitable for allowing any thermal expansion of the O-ring.

Continuing with tightening of the nut, finally, the frustoconical edge 13d is bent inwards so that the internal edge thereof comes into contact with the pipe 2, being anchored to the latter and causing the desired mechanical retention of the pipe itself in the axial direction.

It must be pointed out that if, at the moment of insertion of the union 10 onto the pipe 2, the latter should not have correctly reached the end of its travel onto the bottom of the guide bush 11, the rotation of the frustoconical edge 13d of the nose piece 13 and the consequent interference thereof with the pipe 1 also produce an axial displacement of the pipe towards the end-of-travel stop 11g of the bush with consequent recovery of any play resulting from assembly.

As illustrated in Fig. 4, the frustoconical annular edge 13d may also be formed with radial incisions 13f so as to facilitate the deformation of the edge itself towards the longitudinal axis of the union.

It is envisaged moreover that the fastening, in the axial direction, between the nose piece 13 and the bush 11 may be achieved in alternative ways such as, for example, by means of bonded connections with a predetermined resistance to breakage by shearing or connections with a threaded portion having a very fine pitch and large amount of play so as to allow release of this connection when subject to a thrusting action with a predetermined axial force.

In addition to this it is also envisaged that said frustoconical edge of the nose piece may be provided with an internal annular shoulder designed to come into engagement with the external surface of the pipe so as to increase the force with which the latter is retained in the axial direction.

## Claims

1. Union for the sealed connection of pipes (1) to threaded connections of hydraulic equipment and the like, comprising at least one element (15) with a female thread (15a) for locking the union on said threaded connection (2,2a), characterized in that it comprises a bush (11) for guiding the pipe (1) having a substantially cylindrical shape with two diameters (11a,11b), housing a first external sealing element (12a) and a second internal sealing element (12b) and provided with means (11e) suitable for engagement with corresponding means (13a,13b) of a nose piece (13) for mutual fastening in the axial direction, said nose piece having means (13e) which are deformable towards the longitudinal axis of the union for engagement and mechanical retaining of the pipe (1).

2. Union according to Claim 1, characterized in that said guide bush (11) has a first part (11a) extending in the axial direction, with a diameter smaller than that of a second part (11b) extending in the axial direction.

3. Union according to Claim 1, characterized in that the external surface of said first part 11a of the guide bush (11) with a smaller diameter is provided with a circumferential seat (11b) for receiving a first sealing element (12b).

4. Union according to Claim 1, characterized in that the internal surface of said second part 11b of the guide bush (11) with a larger diameter is provided with a circumferential seat (12c) for receiving a second sealing element (12b).

5. Union according to Claims 3 and 4, characterized in that said first and second sealing elements (12a,12b) are of the O-ring type.

6. Union according to Claim 1, characterized in that said means for fastening the bush (11) to the nose piece (13) consist of a shoulder (11e) extending radially at least over circumferential sections of the free edge of the said bush part (11b) with a larger diameter.

7. Union according to Claim 1, characterized in that said means for coupling the nose piece (13) with the bush (11) consist of a circumferential seat (13b) defined in the axial direction by two circumferential radial extensions (11a).

8. Union according to Claims 1 and 7, characterized in that at least one of said radial extensions (13a) of the nose piece (13) is resiliently deformable in the axial direction.

9. Union according to Claim 1, characterized in that said means for engagement between nose piece (13) and bush (11) consist of a bonding agent with a predetermined shearing breakage strength.

10. Union according to Claim 1, characterized in that said means for engagement between nose piece (13) and bush (11) consist of a thread with a very fine pitch and large amount of play.

11. Union according to Claim 1, characterized in that said means of the nose piece for mechanically retaining the pipe (1) in the axial direction consist of an edge (13d) of substantially frustoconical shape designed to be deformed towards the longitudinal axis of the union as a result of the nut (15) and to interfere with the said pipe.

12. Union according to Claims 1 and 11, characterized in that said frustoconical edge (13d) has an internal annular shoulder designed to engage with the external surface of the pipe (1) so as to increase the force with which the latter is retained in the axial direction.

13. Union according to Claims 1 and 11, characterized in that said frustoconical edge (13d) has radial incisions designed to facilitate deformation thereof towards the axis of the union.
